# EUROPEAN PATENT SPECIFICATION

(11) **EP 2 070 783 B1**
(45) Date of publication and mention of the grant of the patent: **31.03.2010**
(21) Application number: 07024000.7
(22) Date of filing: 11.12.2007
(51) Int. Cl.: B60R 25/02, B60R 25/10, B60Q 1/50

(54) **Automobile steering lock with a warning device**
Automobil-Lenkschloss mit Warnvorrichtung
Verrouillage de direction automobile doté d'un dispositif d'alarme

(43) Date of publication of application: 17.06.2009
(73) Proprietor: Yung Chan Electrical Instrument Co., Ltd., Tainan City (TW)
(72) Inventor: Yu Pin-Ying, Tainan City (TW)
(74) Representative: Zeitler, Giselher

(56) References cited:
- GB-A- 2 330 435
- US-A- 5 598 725
- US-A1- 2006 267 742
- US-A1- 2007 008 086
- US-B1- 6 734 788

## Description

### BACKGROUND OF THE INVENTION

### 1. Field of the Invention

This invention relates to an automobile steering lock with a warning device, particularly to one able to sound out and flash with a help signal for a double warning, really achieving an anti-theft purpose.

### 2. Description of the Prior Art

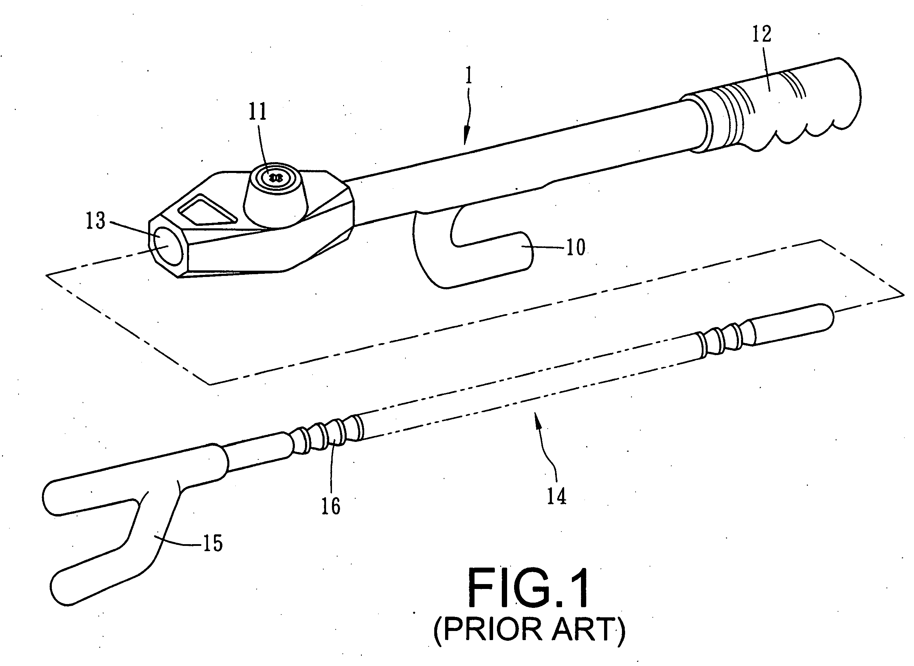

Commonly, as shown in Fig. 1, a conventional automobile steering lock is provided with a main body 1, which has a hook 10 located at its lower side, a lock core 11 positioned at its one end, a grip 12 formed at its other end, a through hole 13 bored lengthwise and opening out of the other end for a telescopic rod 14 to extend in and out, a hook 15 located at one end of the telescopic rod 14, and plural locking grooves 16 formed around the telescopic rod 14. In using, first, the conventional automobile steering lock is flatly laid on a steering wheel, with the hook 10 of the main body 1 fitted with an inner edge of the steering wheel at one side. Next, the telescopic rod 14 is stretched out to keep the hook 15 fitted with an inner edge of the steering wheel at the other side, so that the arm of the main body 1 is extended out to be located between the steering wheel and the driver's seat for restricting the steering wheel from being freely turned around to achieve an anti-theft purpose. However, if the telescopic rod 14 or the main body 1 is beaten vigorously by a burglar, a deadbolt of the lock core 11 is apt to be released or broken to get unlocked. In addition, people around the automobile may not to be able to notice it even if the steering wheel is being broken by a burglar.

An automobile steering lock with a warning device showing the features of the pre-amble of claim 1 is known from US-5 598 725.

### SUMMARY OF THE INVENTION

The objective of this invention is to offer an automobile steering lock able to sound out and flash with a help signal for double warning.

### BRIEF DESCRIPTION OF DRAWINGS

This invention is better understood by referring to the accompanying drawings, wherein:
Fig. 1 is an exploded perspective view of a conventional automobile steering lock;
Fig. 2 is an exploded perspective view of a first preferred embodiment of an automobile steering lock with a warning device in the present invention;

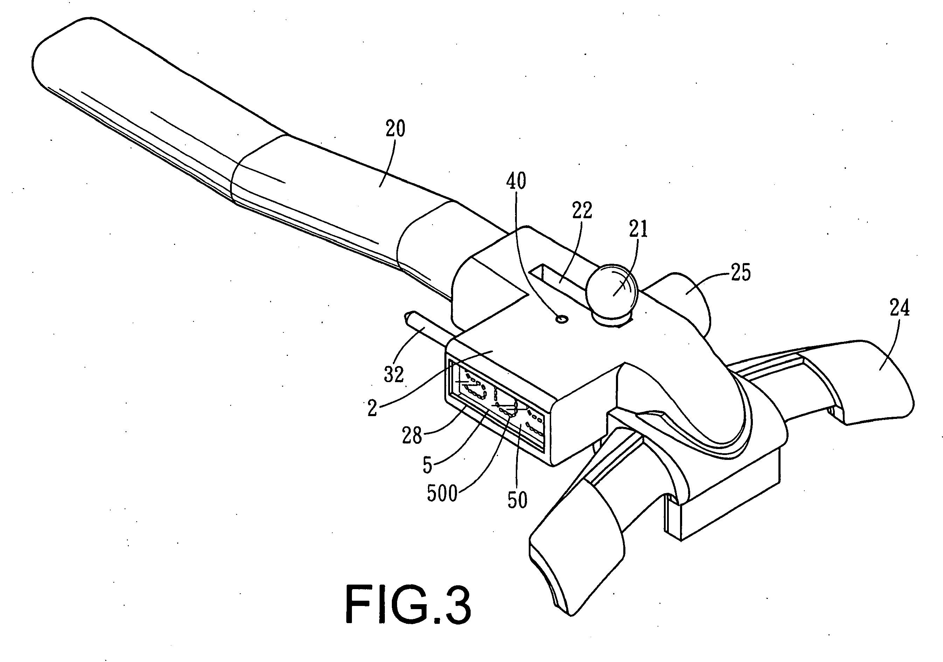

Fig. 3 is a perspective view of the first preferred embodiment of an automobile steering lock with a warning device in the present invention;
Fig. 4 is a cross-sectional view of the first preferred embodiment of an automobile steering lock with a warning device in the present invention;
Fig. 5 is a cross-sectional view of the first preferred embodiment of an automobile steering lock with a warning device in the present invention, showing it being locked;

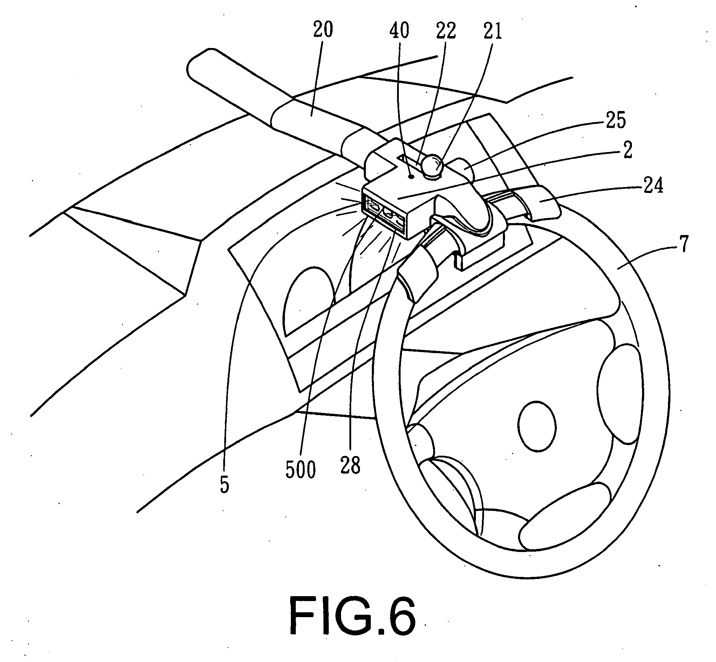

Fig. 6 is a perspective view of the first preferred embodiment of an automobile steering lock with a warning device in the present invention, showing it being locked on a steering wheel;

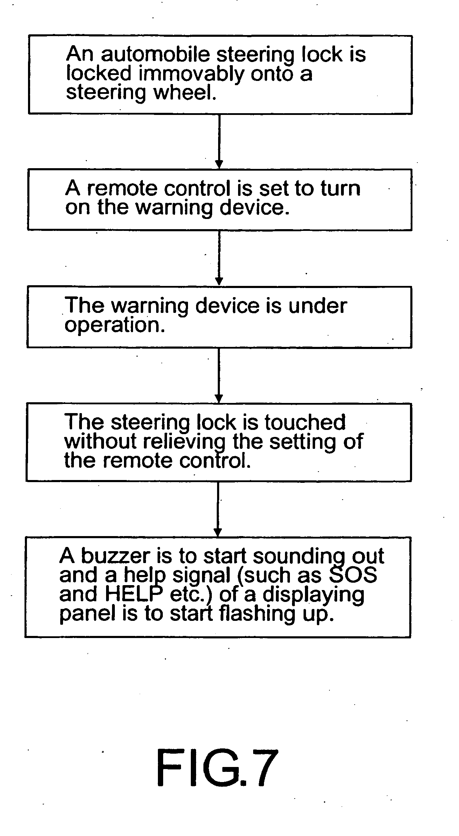

Fig. 7 is a block diagram showing how the present invention operates the warning device; and
Fig. 8 is a perspective view of a second preferred embodiment of an automobile steering lock with a warning device in the present invention, showing it being locked on a steering wheel.

### DETAILED DESCRIPTION OF THE PREFERRED EMBODIMENT

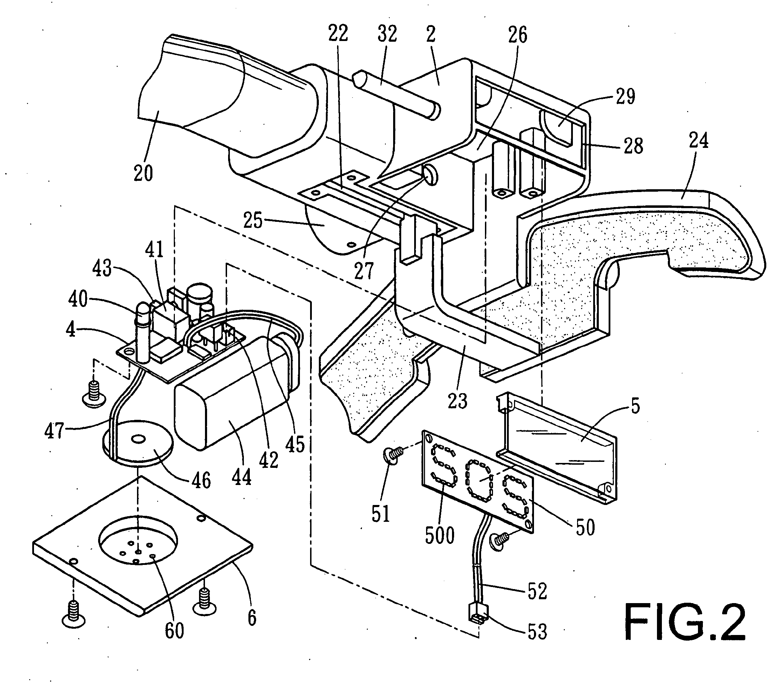

As shown in Figs. 2 ∼ 4, a first preferred embodiment of an automobile steering lock with a warning device in the present invention includes a base 2, a lock core 3, a PC board 4, a light-permeable board 5 and a lid 6.

The base 2 is provided with a stationary rod 20 formed at its back, a pulling rod 21 located in its top, a sliding groove 22 inserted by the pulling rod 21, an inserting hole 210 bored in the pulling rod 21, a blocking member 23 vertically bent under the pulling rod 21, a locking member 24 formed at its front, a lock core base 25 extending from one side, a chamber 26 formed in its bottom portion, a deadbolt hole 27 bored in an inner wall of the chamber 26, a through opening 28 cut in its sidewall to communicate with the chamber 26, and at least one positioning plate 29 installed in the chamber 26.

The lock core 3 is fitted in the lock core base 25, provided with a deadbolt 30 to extend in and out the deadbolt hole 27, a compression spring 31 fitting around the deadbolt 30, and an antenna 32 located on an outer wall of the base 2.

The PC board 4 is installed in the chamber 26, provided with an indicating lamp 40 extended up on the top of the base 2, a micro switch 41, a socket 42, and a touch element 43 projecting on one side of the micro switch 41. A battery 44 is installed in the chamber 26 and connected to the PC board 4 by a connecting line 45. A buzzer 46 is connected to the PC board 4 by a connecting line 47.

The light-permeable board 5 is installed in the chamber 26 of the base 2, positioned stably by the at least one positioning plate 29. A displaying panel 50 is fixed inside the light-permeable board 5 by plural fastening elements 51, able to reveal a help signal 500 such as words SOS and HELP, etc. A connecting line 52 has one end installed with a plugging head 53 for engaging with the socket 42 of the PC board 4, and the other end connected to the displaying panel 50.

The lid 6 is covered up the bottom of the base 2, bored with plural holes 60.

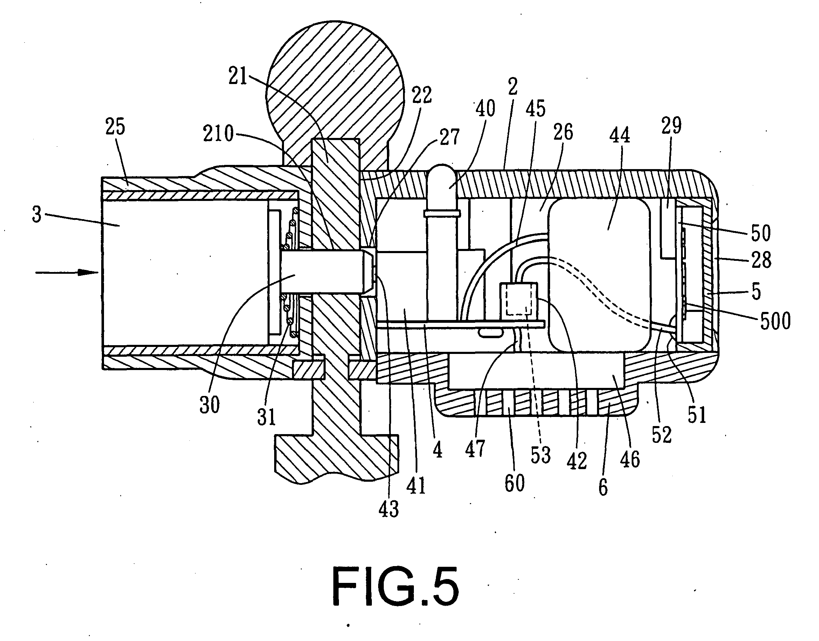

In using, as shown in Figs. 5 ∼ 7, fit the locking member 24 of the base 2 on a steering wheel 7 first and then, drag forward the pulling rod 21 to move the blocking member 23 below it to enclose the steering wheel 7. And, the stationary rod 20 is laid on a dashboard to keep the steering wheel immovable. Next, press inwards the lock core 3 to make the deadbolt 30 simultaneously moved inward to squeeze the compression spring 31, so that the deadbolt 30 is inserted into the plugging hole 210 of the pulling rod 21 and the deadbolt hole 27 of the base 2 to keep the pulling rod 21 immovably positioned. By the time, the end of the deadbolt 30 is to press on the touch member 43 of the micro switch 41 of the PC board 4 to keep the warning device on the PC board 4 ready to be electrified. Then, after having locked the car doors, a driver can use a remote control to turn on the warning device on the PC board 4, with the indicating lamp 40 lit up. So, the steering wheel 7 is immovably locked by the steering lock, with the anti-theft warning device being under operation. If a burglar touches the steering lock, the buzzer 46 is to start sounding out and the help signal 500 (such as SOS and HELP etc.) of the displaying panel 50 is to start flashing up, for attracting attention of people around the car to frighten the burglar from stealing the car. When the warning device of the steering lock is to be released, a user has to relieve control setting of the remote control first and then, turn around the lock core 3 by a key to keep the lock core 3 and the deadbolt 30 elastically pushed outward by the compression spring 31. Thus, the deadbolt 30 is separated from the tough member 43 of the micro switch 41 and the plugging hole 210 of the pulling rod 21, stopping warning operation for unlocking the steering lock.

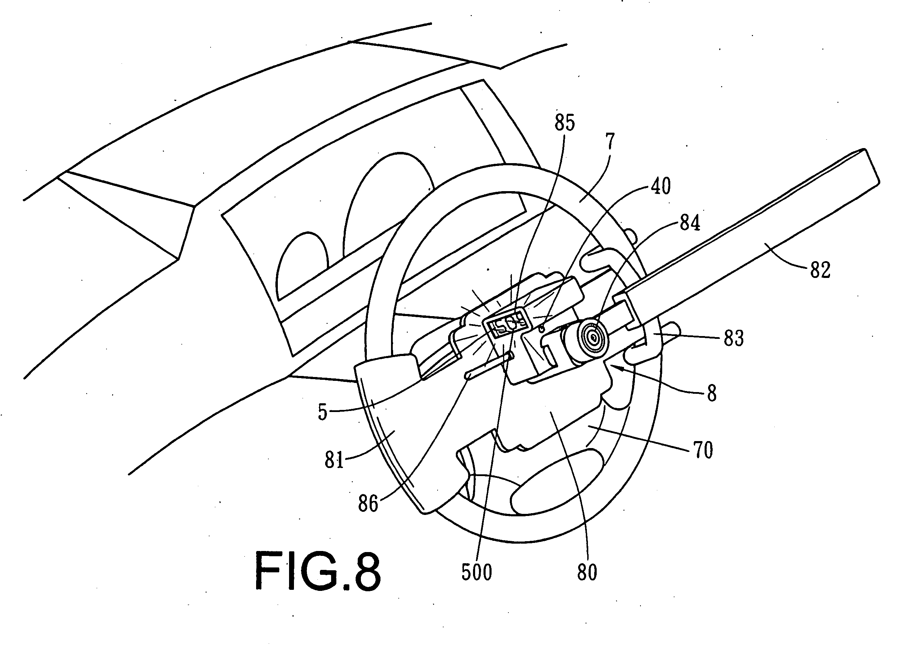

Next, as shown in Fig. 8, a second preferred embodiment of an automobile steering lock 8 with a warning device in the present invention has almost the same components as the first preferred embodiment does, except having a blocking plate 80 that is provided with a locking groove 81 and a stationary rod 82 formed at two sides respectively. The stationary rod 82 is provided with a hook 83. The steering lock 8 is also provided with a lock core 84, a through opening 85, an antenna 86, the PC board 4, the battery 44, the buzzer 46, the light-permeable board 5 and the displaying panel 50. The PC board 4 is likewise provided with the indicating lamp 40 extended out of the steering lock 8, and the micro switch 41. The light-permeable board 5 and the displaying panel 50 are installed in the through opening 85.

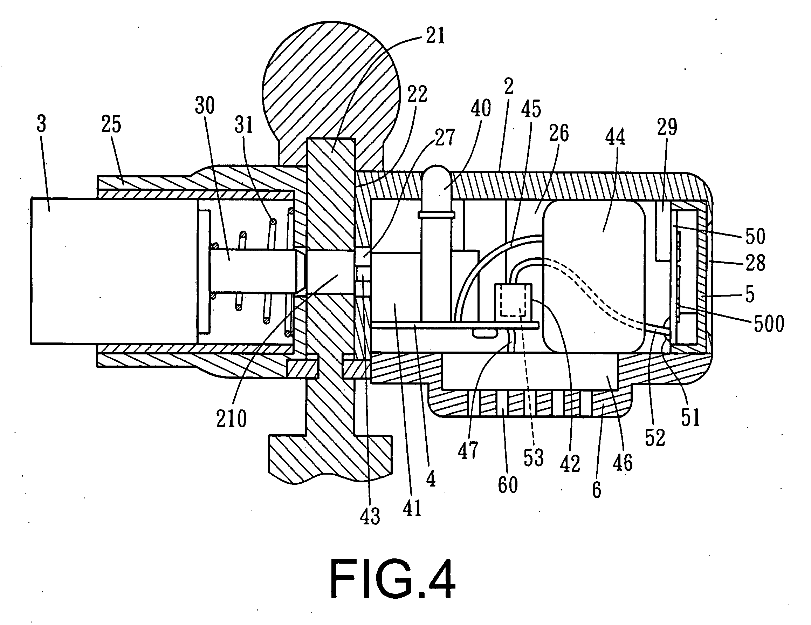

In using, referring to Figs 4 and 8, lay the steering lock 8 on the steering wheel 7 first to keep the locking groove 81 fitted with the steering wheel 7 at one side and the blocking plate 80 rested on a safety air bag 70 installed in the center of the steering wheel 7. Next, pull reversely the stationary rod 82 to keep the hook 83 fitted with steering wheel 7 at the other side. The lock core 84 is pressed down to keep the steering lock 8 locked. By the time, as mentioned in the first embodiment, a deadbolt (not shown in the Fig. 8) is dragged by the lock core 84 to press on the touch member 43 of the micro switch 41 of the PC board 4 to keep the warning device on the PC board 4 ready to be electrified. Then, after locking the car doors, a driver can use a remote control to turn on the warning device on the PC board 4 of the steering lock 8, with the indicating lamp 40 lit up. So, the steering wheel 7 is immovably locked by the steering lock 8. In addition, as the safety air bag 70 is completely blocked by the steering lock 8, it is unable to be stolen by a thief. With the stationary rod 82 extended outward to prevent the steering wheel 7 from freely turned around, and with the warning device to sound out and to display the help signal 500, the steering lock 8 can really achieve an utmost anti-theft purpose.

## Claims

1. Automobile steering lock with a warning device, comprising:
a base (2) provided with a chamber (26) that accommodates a PC board (4), a battery (44) and a buzzer (46);
**characterized by** a light-permeable board (5) that is installed at one side of said base (2) in the chamber (26) and that is provided with a displaying panel (50) fixed, inside the permeable board (5) capable of revealing a help signal, such as words "SOS" and "HELP" (500), said displaying panel (50) connected to the PC board (4) via a connecting line (52).

2. Automobile steering lock according to claim 1, **characterized in that** a lock core base (25) is located at one side of said base (2) for containing a lock core (3), a deadbolt (30), a compression spring (31), and a deadbolt hole (27) is bored in an inner wall of said chamber (26) of said base (2) for said deadbolt (30) to extend in and out.

3. Automobile steering lock according to claim 1 or 2, **characterized in that** at least one positioning plate (29) is provided in said chamber (26) of said base (2) for positioning stably said light-permeable board (5) and said displaying panel (50).

4. Automobile steering lock according to one of claims 1 to 3, **characterized in that** said PC board (4) is provided with an indicating lamp (40) extended out of an outer surface of said base (2), a micro switch (41), and a touch member (43) projected at one side of said micro switch (41).

5. Automobile steering lock according to one of the foregoing claims, **characterized in that** said PC board (4) is provided with a socket (42) for being plugged by a plugging head (53) installed at one end of said connecting line (52) of said displaying panel (50).

6. Automobile steering lock according to one of the foregoing claims, **characterized in that** said base (2) is provided with a through opening (28) bored in its outer wall for installing said light-permeable board (5).

7. Automobile steering lock according to one of the foregoing claims, **characterized in that** said help signal (500), such as "SOS" or "HELP", is flashed up.

## Patentansprüche

1. Kraftfahrzeug-Lenkschloß mit einer Warnvorrichtung, umfassend eine Grundplatte (2) mit einem Kammer (26), die ein PC-Board, eine Batterie (44) und eine Summer (46) aufnimmt, **gekennzeichnet durch** eine lichtdurchlässige Platte (5), das auf der einen Seite der Grundplatte (2) in der Kammer (26) angeordnet und mit einer Anzeigetafel (50) versehen ist, die im Inneren der lichtdurchlässigen Platte (5) befestigt ist und ein Hilfe-Signal, beispielsweise die Worte "SOS" und "Help" (500), aufnehmen kann, wobei die Anzeigetafel (50) an das PC-Board (4) über eine Verbindungsleitung (52) angeschlossen ist.

2. Kraftfahrzeug-Lenkschloß nach Anspruch 1, **dadurch gekennzeichnet, daß** ein Schloßkernkörper (25) auf der einen Seite der Grundplatte angeordnet ist, der einen Schloßkern (3), einen festen Bolzen (30) und eine Kompressionsfeder (31) enthält, und daß in eine Innenwand der Kammer (26) der Grundplatte (2) ein Festbolzenloch (27) gebohrt ist, in das sich der feste Bolzen (30) hinein und heraus erstreckt.

3. Kraftfahrzeug-Lenkschloß nach Anspruch 1 oder 2, **dadurch gekennzeichnet, daß** in der Kammer (26) der Grundplatte wenigstens eine Positionierungsplatte (29) vorgesehen ist, die dazu dient, die lichtdurchlässige Platte (5) und die Anzeigetafel (50) stabil anzuordnen.

4. Kraftfahrzeug-Lenkschloß nach einem der Ansprüche 1 bis 3, **dadurch gekennzeichnet, daß** das PC-Board (4) mit einer Anzeigelampe (40) versehen ist, die aus einer äußeren Oberfläche der Grundplatte (2) herausragt, sowie mit einem Mikroschalter (41) und einem Berührungskörper (43), der auf der einen Seite des Mikroschalters (41) übersteht.

5. Kraftfahrzeug-Lenkschloß nach einem der vorhergehenden Ansprüche, **dadurch gekennzeichnet, daß** das PC-Board (4) mit einer Fassung (42) versehen ist, in die ein Steckerkopf (53) eingesteckt werden kann, der an dem einen Ende der Verbindungsleitung (52) der Anzeigetafel (50) angeordnet ist.

6. Kraftfahrzeug-Lenkschloß nach einem der vorhergehenden Ansprüche, **dadurch gekennzeichnet, daß** die Grundplatte (2) mit einer Durchgangsöffnung (28) versehen ist, die in ihre Außenwand gebohrt ist und dazu dient, die lichtdurchlässige Platte (5) einzubauen.

7. Kraftfahrzeug-Lenkschloß nach einem der vorhergehenden Ansprüche, **dadurch gekennzeichnet, daß** das Hilfe-Signal (500), beispielsweise "SOS" oder "Help", blinkt.

## Revendications

1. Verrouillage de direction automobile avec un dispositif d'avertissement, comprenant :
une base (2) pourvue d'une chambre (26) qui reçoit une carte à circuits imprimés (4), une pile ou batterie (44) et un vibreur (46) ;
**caractérisé par** une carte perméable à la lumière (5) qui est installée sur un côté de ladite base (2) dans la chambre (26) et qui est pourvue d'un panneau d'affichage (50) fixé à l'intérieur de la carte perméable (5) et capable de révéler un signal d'appel à l'aide, comme les mots "SOS" et "HELP" (500), ledit panneau d'affichage (50) étant connecté à la carte à circuits imprimés (4) via une ligne de connexion (52).

2. Verrouillage de direction automobile selon la revendication 1, **caractérisé en ce qu'**une base de noyau de verrou (25) est située sur un côté de ladite base (2) pour contenir un noyau de verrou (3), un pêne dormant (30), un ressort de compression (31) et un trou de pêne (27) percé dans une paroi intérieure de ladite chambre (26) de ladite base (2) pour l'entrée et la sortie dudit pêne dormant (30) dans ledit trou.

3. Verrouillage de direction automobile selon la revendication 1 ou 2, **caractérisé en ce qu'**au moins une plaque de positionnement (29) est prévue dans ladite chambre (26) de ladite base (2) pour positionner de façon stable ladite carte perméable à la lumière (5) et ledit panneau d'affichage (50).

4. Verrouillage de direction automobile selon l'une des revendications 1 à 3, **caractérisé en ce que** ladite carte à circuits imprimés (4) est pourvue d'une lampe indicatrice (40) qui s'étend hors d'une surface extérieure de ladite base (2), d'un microrupteur (41), et d'un élément tactile (43) qui se projette sur un côté dudit microrupteur (41).

5. Verrouillage de direction automobile selon l'une des revendications précédentes, **caractérisé en ce que** ladite carte à circuits imprimés (4) est pourvue d'une douille (42) pour recevoir une tête-culot (53) installée à une extrémité de ladite ligne de connexion (52) dudit panneau d'affichage (50).

6. Verrouillage de direction automobile selon l'une des revendications précédentes, **caractérisé en ce que** ladite base (2) est pourvue d'une ouverture traversante (28) percée dans sa paroi extérieure pour installer ladite carte perméable à la lumière (5).

7. Verrouillage de direction automobile selon l'une des revendications précédentes, **caractérisé en ce que** ledit signal d'appel à l'aide (500), tel que "SOS" ou "HELP", est clignotant.
